# EUROPÄISCHE PATENTSCHRIFT

(11) **EP 2 228 142 B1**
(45) Veröffentlichungstag und Bekanntmachung des Hinweises auf die Patenterteilung: **08.02.2012**
(21) Anmeldenummer: 10002362.1
(22) Anmeldetag: 08.03.2010
(51) Int. Cl.: B08B 1/00, B08B 3/02

(54) **Vorrichtung zum Reinigen von glatten Flächen**
Device for cleaning smooth areas
Dispositif de nettoyage de surfaces lisses

(30) Priorität: 09.03.2009 DE 202009003130 U; 27.04.2009 DE 202009006195 U
(43) Veröffentlichungstag der Anmeldung: 15.09.2010
(73) Patentinhaber: Bolkart, Irene, 88410 Bad Wurzach (DE)
(72) Erfinder: Bolkart, Werner, 88410 Bad Wurzach (DE)
(74) Vertreter: Schulz, Manfred

(56) Entgegenhaltungen:
- DE-A1- 2 737 418
- DE-A1- 4 433 926
- FR-A1- 2 841 888
- US-A- 5 092 012

## Beschreibung

Die Erfindung betrifft eine Vorrichtung zum Reinigen von glatten Flächen, wie zum Beispiel Oberflächen von Solarkollektoren, Photovoltaikelementen, Dachflächen von Gebäuden, insbesondere aus Glas oder dergleichen.

Derartige Vorrichtungen zum Reinigen von glatten Flächen sind zum Teil bekannt. Sie sind allerdings bei ihrem bestimmungsgemäßen Einsatz von verschiedenen Nachteilen geprägt. So ist beispielsweise bei einer aus dem Stand der Technik bekannten Lösung einer Vorrichtung zum Reinigen von Solar- beziehungsweise Photovoltaikelementen ein Vorratsbehälter vorgesehen, der auf der Erde beziehungsweise dem Fußboden ausstellbar ist und von dem aus sich ein Gestänge erstreckt, das dann die Photovoltaikelemente erreicht. An dem Ende des Gestänges ist eine Reinigungseinheit vorgesehen, die zum Beispiel aus einer rotierenden Bürste besteht, wobei eine Reinigungsflüssigkeit auf die Oberfläche gesprüht wird und die Bürte das Element reinigt. Bei der im Stand der Technik bekannten Lösung ist der Nachteil dadurch angegeben, dass die gesamte Last der Vorrichtung über Räder auf die Oberfläche des Solarkollektors übertragen wird. Damit ist es möglich, dass durch die Last der Vorrichtung gegebenenfalls Photovoltaikelemente beziehungsweise Solarkollektoren beschädigt werden. Des weiteren ist es der Bedienperson nicht möglich, direkt, also visuell, die Reinigungsarbeit zu überwachen, was ebenfalls von Nachteil ist. Des weiteren ist die Vorrichtung derart konzipiert, dass es nicht möglich ist, insbesondere größere Flächen, wie sie beispielsweise für Photovoltaikelemente immer häufiger zu sehen sind, zu reinigen.

Aus der Druckschrift DE 91 15 946.6 ist ein Reinigungsfahrzeug, wie vorher beschrieben, bekannt. Dieses Fahrzeug dient der Reinigung von Fassaden, Fahrzeugen oder dergleichen. Die Flächen werden mittels Strahlverfahren mit viralischen oder metallischen Strahlgut oder manuell geführten Hochdruckwasserstrahlen bearbeitet.

Die Druckschrift EP 1 862 222 A2 zeigt eine Beschichtungsvorrichtung an Fassaden beziehungsweise Dächern. Diese Lösung eignet sich nicht, um beispielsweise Solarkollektoren beziehungsweise Photovoltaikanlagen zu reinigen.

Aus der Druckschrift DE 27 37 418 ist eine ortsunabhängige Flugzeugwaschmaschine bekannt. Wie aus diesen Unterlagen ersichtlich, ist dabei ein Tragarm an einem Gestell vorgesehen, an dem eine Reinigungseinheit bewegbar ist. Diese Vorrichtung ist allerdings konkret für Flugzeuge beziehungsweise den Einsatz bei der Reinigung von Flugzeugen gedacht. Nicht geeignet ist diese Vorrichtung zum Reinigen von Oberflächen von Solarkollektoren, Photovoltaikelementen, Dachflächen von Gebäuden, insbesondere aus Glas oder dergleichen. Es ist nicht möglich, den Lasteintrag auf die zu reinigende Oberfläche zu kontrollieren.

Aus der Druckschrift US 5,092,012 A ist eine Reinigungsvorrichtung für Flugzeugkörper bekannte. Auch hier ist die Lasteintragung beziehungsweise Abführung nicht geregelt. Vielmehr befindet sich an dem Tragarm des Bewegungsgerätes ein Tragarm für das Reinigungsgerät. Die Bedieneinheit sitzt oberhalb des ersten Tragarmes und ist nicht zum übertragen der Last des Tragarmes mit dem Reinigungsgerät geeignet.

Aus der Druckschrift DE 44 33 926 A1 ist eine Vorrichtung für eine Oberflächenbehandlung ausgedehnter, vorzugsweise gewölbter Flächen, insbesondere der Rumpfaußenflächen von Flugzeugen und Schiffen bekannt. Eine derart dicke Vorrichtung lässt sich für die Reinigung von Photovoltaik- oder Solaranlagen beziehungsweise von Dachflächen nicht einsetzen.

Des Weiteren ist aus der Druckschrift FR 2 841 888 eine Hebebühne gezeigt, wie sie weiter vorn beschrieben wurde. Hier wird gezeigt, wie eine Bedienperson, die einen Flüssigkeitsschlauch in der Hand hält, diesen von der Hebebühne auf ein zu reinigendes Element richtet.

Des Weiteren sind im Stand der Technik Reinigungsvorrichtungen für Photovoltaik, Solaranlagen und/oder Dachflächen bekannt, die, wie weiter vorn beschrieben, vom Boden aus zu betreiben sind und zum Teil die Bedienperson die zu reinigenden Flächen nicht einsehen kann. Des Weiteren ist die Lasteintragung auf die zu reinigenden Flächen nicht beeinflussbar.

Ausgehend von diesem Stand der Technik ist es Aufgabe der Erfindung, eine Vorrichtung vorzuschlagen, die, die vorher beschriebenen Nachteile nicht mehr aufweist und die insbesondere einen mechanisierten Einsatz ermöglicht, ohne die zu reinigende Fläche zu belasten und die Reinigungsarbeiten problemlos zu überwachen.

Die Erfindung geht von dem oben beschriebenen Stand der Technik aus, und schlägt zur Lösung der gestellten Aufgabe eine Vorrichtung zum Reinigen von glatten Flächen, wie zum Beispiel Oberflächen von Solarkollektoren, Photovoltaikelementen, Dachflächen von Gebäuden, insbesondere aus Glas oder dergleichen, vor, mit wenigstens einer Reinigungseinheit, einem Gestänge, an dessen einem Ende die Reinigungseinheit angeordnet ist und wenigstens einer Bedieneinheit, wobei eine Abfang- beziehungsweise verstelleinrichtung vorgesehen ist, die am Gestänge angreift, mittels derer die von der Vorrichtung auf die Fläche eingetragene Last einstellbar beziehungsweise veränderbar ist, die sich dadurch auszeichnet, dass die Abfang- beziehungsweise Verstelleinrichtung die Last des Gestänges über die Bedieneinheit abfängt beziehungsweise ableitet. Durch diese Lösung ist es jetzt gegeben, dass die im Stand der Technik sich als nachteilig auswirkende Eintragung beziehungsweise Übertragung der Last der Vorrichtung selbst auf die Oberfläche der zu reinigenden Elemente nicht mehr vorhanden ist. Die Abfang- beziehungsweise Verstellvorrichtung ermöglicht es, diese Lasten eben abzufangen und gegebenenfalls die Vorrichtung so einzustellen, dass die Reinigungseinheit nahezu ohne Last über die zu reinigenden Flächen bewegbar ist. Des weiteren ist eine Bedieneinheit vorgesehen, von der aus es möglich ist, den Beinigungsvorgang auch visuell, ohne technische Hilfsmittel, zu überwachen. Dies schließt selbstverständlich nicht aus, dass zusätzliche Überwachungseinheiten erfindungsgemäß an der Vorrichtung vorgesehen werden, wie dies später noch zu beschreiben ist. Die Reinigungseinheit umfaßt dabei sowohl eine Versprüheinheit für das

Aufbringen der Reinigungsflüssigkeit auf die Oberfläche als auch eine Bürste, ein Lederlappen-Reinigungsgerät oder dergleichen, die die Verschmutzungen von der Oberfläche löst. Gegebenenfalls kann an der Reinigungseinheit auch eine Absaugvorrichtung vorgesehen werden, die die versprühte Reinigungsflüssigkeit dann wieder aufsaugt. Allerdings funktioniert die Vorrichtung nach der Erfindung auch bereits ohne diese Absaugeinheit mit hervorragenden Effekten Die Lösung nach der Erfindung ist dadurch gekennzeichnet, dass die Abfang- beziehungsweise Verstelleinheit die Last des Gestänges über die Bedieneinheit abfängt beziehungsweise ableitet. Die Bedieneinheit ist dabei beispielsweise als Bühne ausgebildet, an der das Gestänge an wenigstens einer Achse drehbar gelagert ist. Zusätzlich ist bevorzugt an der dem Gestänge zugewandten Seite wenigstens ein Rahmen oder dergleichen vorgesehen, an dem die Abfang- beziehungsweise Verstelleinheit angeordnet beziehungsweise befestigt ist. Die Abfang- beziehungsweise Verstelleinrichtung ist selbstverständlich beabstandet von dem Drehpunkt des Gestänges angeordnet, um das Abfangen der Last des Gestänges inklusive der Reinigungseinheit zu ermöglichen.

Bei bekannten Vorrichtungen war es bisher notwendig, zusätzliche Überwachungseinrichtungen vorzusehen, um den Reinigungsvorgang zu überwachen. Diese Arbeiten sind bei Vorrichtungen des Standes der Technik nur vom Boden aus zu überwachen, wo beispielsweise auf großen Scheunendächern angeordnete Solarkollektoren oder Photovoltaikelemente gar nicht mehr einsehbar sind. Im weiteren wird komplett vermieden, dass Last der Vorrichtung selbst auf die zu reinigenden Elemente drückt. Damit ist die Gefahr der Beschädigung durch die Reinigungsvorrichtung komplett behoben worden. Des weiteren waren die Lösungen des Standes der Technik dadurch gekennzeichnet, dass es sich im wesentlichen um manuell tragbare beziehungsweise bedienbare Gestänge handelte, die von der Bedienperson entweder selbst getragen werden müssen beziehungsweise durch die Bedienperson sozusagen abschnittsweise umgesetzt werden müssen.

Eine eigene Fortbewegungsmöglichkeit der Vorrichtung ohne ein den Aufwand erhöhendes Spezialfahrzeug und ohne die Bedienperson dabei übermäßig zu belasten, ist im Stand der Technik bisher nicht bekannt. Die körperliche Belastung für die Bedienperson ist bei den meisten bekannten Lösungen im Stand der Technik damit sehr hoch, was durch die Vorrichtung nach der Erfindung komplett vermieden wird. So läßt sich die Bedieneinheit entweder von selbst bewegen, durch eigene Fortbewegungsmittel, oder aber, sie ist an bewegbare Mittel ankoppelbar, mittels derer dann die gesamte Vorrichtung entsprechend der Ausdehnung der jeweiligen Flächen an dieser entlang bewegt werden kann. Dazu eigenen sich beispielsweise fahrbare Hebebühnen, Kräne oder dergleichen in hervorragender Weise, wenn man an deren Hebevorrichtung beispielsweise eine entsprechende Schnittstelle vorsieht.

Das aus dem Stand der Technik bekannte, weiter vorn beschriebene Reinigungsfahrzeug ist insbesondere deshalb sehr aufwendig, weil dazu ein sehr aufwendiges Spezialfahrzeug benötigt wird, um die Arbeiten durchzuführen. Des Weiteren dient dieses Reinigungsfahrzeug der Reinigung von Fassadenflächen und ist bei der Reinigung von Solaranlagen, die sich auf Dächer befinden nur bedingt einzusetzen. Der Ausleger des Fahrzeuges sitzt an einem Hydraulikzylidner, der offensichtlich nur dazu dient, den Ausleger zu teleskopieren. Die im Stand der Technik bereits beschriebene nachteilige Wirkung unterschiedlicher Lasteintragung, insbesondere die Gefahr von Beschädigung der Solaranlagen durch zu hohe Lasten der Reinigungsvorrichtung ist durch die bekannte Lösung des Standes der Technik nicht gewährleistet. Zudem ist eine freie Einstellbarkeit der Reinigungsvorrichtung nicht möglich. Vielmehr muss hier zum Beispiel ein Gelenk auf eine bestimmte Stellung vor Beginn der Reinigungsarbeiten eingestellt werden und ist dann nicht mehr verstellbar. Des Weiteren ist eine freie Einsicht der zu reinigenden Flächen durch die Bedienperson nicht gewährleistet. Die Erfindung löst die Beseitigung der geschilderten Nachteile dadurch, dass eine Abfang- beziehungsweise Verstelleinrichtung die Last des Gestänges und die Last der Reinigungseinheit über die Bedieneinheit abfängt beziehungsweise ableitet. Des Weiteren ist durch diese Lösung kein Spezialfahrzeug mehr nötig, sondern es reicht aus, hierzu entsprechende Hebebühnen beispielsweise vorzusehen, um die Reinigungsvorrichtung aufzunehmen beziehungsweise zu tragen. Eine freie Einstellbarkeit der Reinigungseinheit ist hier gegeben, wodurch der Einsatz mit der erfindungsgemäßen Lösung universell an unterschiedlich geneigten Flächen erfolgen kann.

Auch die nächste im Stand der Technik eingangs beschriebene Lösung ist nicht geeignet, die Aufgabe der Erfindung zu lösen, weil dort keine Reinigungseinheit gezeigt wird. Des Weiteren dient diese im Stand der Technik bekannte Lösung für die Beschichtung an Fassaden beziehungsweise Dächern. Auch ist eine Abfang- beziehungsweise Verstelleinrichtung, die die von der Vorrichtung auf die Oberfläche eingetragene Last abfängt beziehungsweise einstellbar gestaltet, der Beschichtungsvorrichtung im Stand der Technik nicht zu entnehmen. Durch die erfindungsgemäße Vorrichtung wird demzufolge eine Lösung zur Verfügung gestellt, die erstens keine Spezialfahrzeuge mehr notwendig macht und zweitens für die Bedienperson leicht zu bedienen ist und insbesondere auch die Beschädigung von den zu reinigenden Flächen auf ein Minimum reduziert.

Alle weiteren bisher im Stand der Technik bekannten Lösungen müssen vom Boden bedient werden, sodass bereits aus diesem Grund eine Kontrolle der durchzuführenden Arbeiten nicht möglich ist. Des Weiteren ist in keiner der bekannten Lösungen eine Abfangvorrichtung gezeigt, die es ermöglicht, die Last, die die Reinigungseinheit auf die zu reinigende Fläche einträgt, gezielt einzustellen, sodass ein optimales Reinigungsergebnis erzielt wird. Die Erfindung löst dies in hervorragender Weise und stellt demzufolge eine Vorrichtung zum Reinigen von glatten Flächen zur Verfügung, die es ermöglicht, den Einsatz von Spezialfahrzeugen zu vermeiden. Für den Einsatz reicht es aus, die Vorrichtung selbst, entweder mit einem eigenen Antrieb auszustatten, was wesentlich kostengünstiger ist, beziehungsweise die Vorrichtung an einer universellen Hebebühne, wie sie hinlänglich bekannt sind, anzuordnen. Eine solche Hebebühne kann beispielsweise ebenfalls mit Antrieben versehen sein, um die Hebebühne inklusive der dann dort befestigten Reinigungsvorrichtung zu bewegen. Die Bedienperson muss dazu die Hebebühne gegebenenfalls nicht verlassen, wenn der Untergrund ausreichend eben ist und die Bühne für eine eigene Fortbewegung ausgerüstet ist. Ist dies nicht der Fall, kann eine Reinigung abschnittsweise erfolgen, indem jeweils ein bestimmter Abschnitt der zu reinigenden Fläche gereinigt wird, dann die Bedienperson die Hebebühne verlässt, eine Fortbewegung der Bühne zum nächsten Abschnitt erfolgt und dann die Reinigung in bekannter Weise wieder durchgeführt werden kann. Insgesamt wird damit eine universelle Vorrichtung zur Verfügung gestellt, die sämtliche vorher beschriebenen Nachteile des Standes der Technik beseitigt und die einen kostengünstigen Einsatz der Vorrichtung mit einer schnellen Umsetzungemöglichkeit auch zu anderen Anlagen zur Verfügung stellt.

In einer geschickten Variante der Erfindung ist eine Abfangbeziehungsweise Verstelleinrichtung durch einen Seilzug, beispielsweise mit Winde, durch ein verstellbares Gestänge oder dergleichen angegeben. Über den Seilzug beziehungsweise die Winde läßt sich dann das Gestänge inklusive der Reinigungseinheit entsprechend positionieren und so führen, dass keine Last auf die Oberflächen der zu reinigenden Elemente übertragen wird.

Eine etwas komfortablere Möglichkeit ist dadurch angegeben, dass die Abfang- beziehungsweise Verstelleinheit durch wenigstens einen Hydraulikzylinder angegeben ist, der eine bevorzugt teleskopierbare Kolbenstange antreibt. Die Kolbenstange ist dabei zwischen dem Gestänge und der Bedieneinheit auch so angeordnet, dass durch die Veränderung der Länge der Kolbenstange eine Veränderung der Stellung des Gestänges ermöglicht wird, wodurch die gleiche Wirkung erzielt wird, wie dies bei der vorher beschriebenen Variante mit dem Seilzug möglich ist.

Eine geschickte Variante der Erfindung sieht vor, dass die Auffang- beziehungsweise Verstelleinheit neben der vorher beschriebenen Ausbildung als Hydraulikzylinder durch eine Kombination von wenigstens einem Hydraulikzylinder und einem Seilzug angegeben ist. Der Seilzug fängt dabei nur einen bestimmten Teil des Gestänges ab, während der Hydraulikzylinder sowohl der Höhenverstellung dient, als auch dem Abfangen der Last. Damit wird ein Ergebnis erzielt, was die Lastabfangung insgesamt noch verbessert und insbesondere es dadurch erlaubt ist, dass die Hydraulikanlage nicht zu groß dimensioniert werden muss, um beispielsweise bei sehr langenem Gestänge die entsprechenden Lasten noch abzufangen.

Entsprechend einer vorteilhaften Weiterbildung der Erfindung zeichnet sich die Vorrichtung dadurch aus, dass die Bedieneinheit als Bühne ausgebildet ist, an der das Gestänge an wenigstens einer Achse drehbar gelagert ist und bevorzugt an der dem Gestänge zugewandten Seite wenigstens ein Rahmen oder dergleichen vorgesehen ist, an dem die Abfang- beziehungsweise Verstelleinheit angeordnet beziehungsweise befestigt ist. Demnach kann an der Bühne ein Rahmen, eine Platte, ein Träger oder dergleichen vorgesehen sein, an dem dann die Abfang- beziehungsweise Verstelleinheit befestigt wird, um das Gestänge anzuheben beziehungsweise abzusenken. Dabei ist klar, dass die Befestigungsstelle zum einen leicht drehbar ausgebildet sein muß, um eine Verschwenkbarkeit der Abfang- beziehungsweise Verstelleinheit zu gewährleisten. Andererseits muß die Befestigungsstelle beabstandet von der Drehachse des Gestänges vorgesehen sein, um einen gewissen Hebel ausüben zu können. Demnach kann an dem Rahmen sowohl der bereits erwähnte Seilzug als auch ein Hydraulikzylinder mit einer entsprechenden Kolbenstange vorgesehen sein.

Erfindungsgemäß wurde gefunden, dass es von Vorteil ist, wenn die als Bühne ausgebildete Bedieneinheit als Arbeitsbühne ausgebildet ist. Demnach ist es nach der Erfindung vorgesehen, dass die Bedienperson auf der Bedieneinheit, nämlich in Form einer Bühne, Platz findet, um die Vorrichtung zu steuern und zumindestens die Reinigungsarbeiten von einem Standort aus überwachen zu können, der es ermöglicht, eine visuelle Beobachtung durchzuführen. Es ist ein erheblicher Vorteil gegenüber den im Stand der Technik bekannten Vorrichtungen, da hierzu besondere Überwachungseinrichtungen notwendig waren, die erstens nicht immer zuverlässig arbeiten und zweitens auch die Gefahr von Fehlinformationen bieten. Durch die Überwachung durch die Bedienperson können größere Fehler, die zur Zerstörung der zu reinigenden Oberflächen führen könnten, komplett vermieden werden.

Die Erfindung zeichnet sich in einer Variante auch dadurch aus, dass an der Bedieneinheit wenigstens eine Schnittstelle zum Anschluß an ein Hebegerät, wie zum Beispiel eine Hebebühne, einen Bagger, einen Kran oder dergleichen, vorgesehen ist und Hebebühne, Bagger oder Kran eine dazu korrespondierende Schnittstelle für den Anschluß aufweisen. Demnach ist es ohne weiteres möglich, die Bedieneinheit jetzt an einem Hebegerät anzuordnen, so dass die Arbeiten zum einen aus einer gewissen Höhe in einem zur Auflagefläche günstigeren Winkel, als im Stand der Technik bisher möglich, durchgeführt werden können. Des weiteren ist es jetzt auch möglich, entsprechende Arbeitshöhen anzusteuern. Dadurch wird erreicht, dass in großen Höhen angeordnete, zu reinigende Flächen ebenfalls problemlos erreicht werden können und die Sicherheit der Bedienperson trotzdem gewährleistet ist. Im weiteren ist selbstverständlich das "blinde" Reinigen von dem Fußboden aus, ohne zu sehen, dass die Vorrichtung richtig positioniert ist und arbeitet, jetzt komplett vermieden.

Die Vorrichtung nach der Erfindung zeichnet sich auch dadurch aus, dass an der Bedieneinheit das Antriebsaggregat für die Reinigungseinheit inklusive einer Vorrats- und Fördereinrichtung für das oder die Reinigungsmittel vorgesehen ist. Damit läßt sich die gesamte Vorrichtung eben ohne zusätzliche Schlauchverlängerungen auch in größeren Höhen einsetzen. Die Vorrats- und Fördereinheit beziehungsweise auch das Antriebsaggregat für beispielsweise Hydraulik usw. sind auf der Bedieneinheit beziehungsweise an dieser angeordnet, so dass keine entsprechenden Verlängerungen benötigt werden.

Selbstverständlich ist es nach der Erfindung auch möglich, an der Bedieneinheit eine Schnittstelle zum Anschluß von Antriebsmedien, wie zum Beispiel Strom, Hydraulikpumpe oder dergleichen, vorzusehen. Dadurch wird es ermöglicht, für den Fall, dass die Vorrichtung nach der Erfindung keine eigene Antriebsaggregate beziehungsweise Vorrats- und Fördereinrichtungen für die Reinigungsmittel enthält, die Vorrichtung an entsprechenden Geräten anzuschließen, die über diese Medien mit entsprechenden Zuleitungen verfügen.

Die Reinigungseinheit der erfindungsgemäßen Vorrichtung ist gekennzeichnet durch wenigstens eine rotierende Bürste. Vorzugsweise ist es selbstverständlich vorgesehen, zwei beabstandet zueinander, in der gleichen Ebene liegende rotierende Bürsten vorzusehen, die sich vorzugsweise auch gegenläufig drehen. In der einfachsten Variante ist es jedoch ausreichend, eine einzige Bürste vorzusehen.

Die Reinigungseinheit der Vorrichtung nach der Erfindung zeichnet sich auch dadurch aus, dass, ähnlich bestimmter Autowaschanlagen, die Reinigungsarbeit von hin- und herbewegbaren Schwamm-, Leder-, Textil- oder Gummistreifen gebildet ist. Das Reinigungsmittel wird dabei so aufgetragen, dass es sich auf der zu reinigenden Fläche verteilt und die Schwamm-, Leder- oder Gummistreifen dann die Reinigung durch die Hin- und Herbewegung vornehmen.

Bei der Ausgestaltung der Reinigungsvorrichtung in Form einer oder mehrerer Bürsten ist eine Ausgestaltung der Erfindung dadurch gekennzeichnet, dass eine im wesentlichen waagerecht zur Reinigungsfläche orientierte Drehachse für die rotierenden Bürsten vorgesehen ist.

Selbstverständlich umfaßt die Erfindung auch eine Variante, bei der die Bürste eine im wesentlichen senkrecht zur Reinigungsfläche orientierte Drehachse aufweist. Beide Varianten sind zur Erfindung gehörend anzusehen.

Die Erfindung zeichnet sich auch dadurch aus, dass wenigstens eine versprüheinheit zum Aufbringen von Reinigungsflüssigkeit vorgesehen ist. Diese Versprüheinheit ist vorzugsweise selbstverständlich an der Reinigungseinheit angeordnet und zwar derart, dass die Reinigungsflüssigkeit so aufgetragen wird, dass die Bürsten oder andere Reinigungselemente diese Flüssigkeit erfassen und durch Dreh- oder Hin- und Herbewegung verteilen und gleichzeitig die Reinigung vornehmen. Dabei hat es sich herausgestellt, dass es von Vorteil ist, wenn die Versprüheinheit eine insbesondere elektronisch gesteuerte Dosiereinrichtung aufweist, mittels derer Reinigungsmittel und/oder Entspanner beziehungsweise Entspannungsflüssigkeit oder -mittel zumischbar sind.

Ein weiterer Aspekt der zuvor beschriebenen Lösung zeichnet sich dadurch aus, dass die insbesondere elektronisch gesteuerte Dosiereinrichtung entweder für mehrere zur Reinigung notwendige Medien oder nur für ein einziges Medium, wie Wasser, Osmosewasser, Reinigungsflüssigkeit oder dergleichen vorgesehen ist. Dabei ist es möglich, dass die Dosiereinrichtung alle Medien elektronisch steuert oder aber nur ein einziges.

Erfindungsgemäß wurde auch gefunden, dass es ein großer Vorteil ist, wenn eine Versiegelungseinheit, vorzugsweise an der Reinigungseinheit vorgesehen ist, die Versiegelungsmittel auf die gereinigten Flächen aufzubringen vermag.

Die Erfindung umfaßt auch eine Lösung, bei der eine Überwachungseinrichtung vorgesehen ist, die die gereinigten Oberflächen auf Schäden prüft und diese gegebenenfalls anzeigt und/ oder dokumentiert. Damit erhält der Besitzer der zu reinigenden Flächen im Anschluß an die Reinigungsarbeiten gleich eine Dokumentation über den Zustand seiner Flächen. Dies ist insbesondere von Vorteil, wenn Photovoltaikflächen beziehungsweise Solarkollektoroberflächen gereinigt werden. Durch die Überwachung mit einer Überwachungseinrichtung kann festgestellt werden, ob Risse oder Beschädigungen an den Flächen vorhanden sind, die die Leistungsfähigkeit der Anlage beeinträchtigen könnten.

Die Überwachungseinrichtung ist dabei durch wenigstens einen Sensor, eine Videokamera, eine fotographische Aufnahmeeinheit beziehungsweise einen Fotoapparat oder dergleichen, vorzugsweise gekoppelt mit einer Speichereinheit, gebildet. Die Erfindung ist hier auf eine bestimmte Lösung nicht eingeschränkt und umfaßt selbstverständlich auch eine Kombination von mehreren der vorher angegebenen Überwachungsmöglichkeiten.

Als Antriebsaggregat für die Bürste beziehungsweise die Reinigungseinheit selbst ist ein Motor, wie zum Beispiel ein Hydraulik- oder ein Elektromotor, vorgesehen. Dieser ist bevorzugt in Richtung der Achse der Bürsten angeordnet und bewirkt die Drehbewegung. Gegebenenfalls ist zur Reduzierung oder Erhöhung der Geschwindigkeit auch ein Getriebe zwischenschaltbar. Auch hier umfaßt die Erfindung mehrere technische Möglichkeiten.

Von besonderem Vorteil ist es, wenn die Reinigungseinheit am Gestänge zusätzlich schwenkbar angeordnet ist. Dadurch wird es ermöglicht, die Reinigungseinheit immer im exakten Winkel so anzuordnen, dass die Reinigungseinrichtungen, wie Bürsten oder dergleichen, immer planparallel zur zu reinigenden Oberfläche angeordnet sind. Von Vorteil ist es auch, wenn das Gestänge verlängerbar, insbesondere teleskopierbar ausgebildet ist.

Erfindungsgemäß wurde gefunden, dass es von Vorteil ist, wenn in wenigstens einem Teil des Gestänges eine schwingungsaufnehmende beziehungsweise schwingungsdämpfende Verstärkung vorgesehen ist. Insbesondere bei längerem Gestänge ist dies notwendig, um ein Aufschwingen des Gestänges zu verhindern und um das Gewicht gering zu halten.

Die Erfindung zeichnet sich gemäß einer Weiterbildung auch dadurch aus, dass das Gestänge modulartig aufgebaut ist und insbesondere durch das Einfügen beziehungsweise Anfügen von Gestängemodulen verlängerbar ist. Neben einer teleskopierbaren Ausgestaltung ist dies eine äußerst vorteilhafte Variante, da immer mehr Gebäude mit größeren Photovoltaikanlagen ausgerüstet werden, sodass man für unterschiedlichste Einsätze auch unterschiedliche Gestängelängen benötigt. Durch den modulartigen Aufbau ist es möglich, sehr schnell die gewünschte Länge zu erhalten. Der modulartige Aufbau ermöglicht desweiteren eine günstige Lagerhaltung, da die Module selbst relativ platzsparend zu lagern sind.

Die Erfindung schlägt in einer Variante auch vor, dass die einzelnen Module mittels Rohrknotentechnik aufgebaut sind. Die Rohrknotentechnik führt dazu, dass die Belastbarkeit des gesamten Gestänges in erheblichem Maße verbessert wird. So gelingt es, mittels dieser Rohrknotentechnik relativ leichte Gestänge mit einer hohen Tragfähigkeit zu erhalten.

Ein weiterer Aspekt der erfindungsgemäßen Lösung ist dadurch angegeben, dass eine Höhennivelierung vorgesehen ist. Diese Höhennivelierung gestattet es, auch ohne direkte Einsicht, die Vorrichtung entsprechend zu positionieren. Dazu werden bevorzugt Fotozelle, Sensoren oder dergleichen verwendet. Die Steuerung kann üblicherweise über dafür bekannte Steuermodule vorgenommen werden.

Die Erfindung umfaßt auch eine Variante, bei der die Reinigungseinheit auch eine Trocknungseinrichtung beziehungsweise Absaugvorrichtung oder dergleichen umfaßt.

Ein weiterer Aspekt der erfindungsgemäßen Lösung ist dadurch angegeben, dass ein Hebegerät, wie zum Beispiel eine Hebebühne, ein Kran oder dergleichen, mit einer Vorrichtung, wie vorher beschrieben, zur Verfügung gestellt wird.

Im bestimmungsgemäßen Einsatz wird die erfindungsgemäße Vorrichtung zunächst so positioniert, dass mit dem Gestänge, die zu reinigende Fläche erreicht wird. Dazu wird die Vorrichtung gegebenenfalls mit einer Hebebühne, mit einem Hebezeug oder dergleichen entsprechend positioniert.

Zweckmäßigerweise wird bei einer geneigten Dachfläche im oberen Bereich mit der Reinigung begonnen. Das heißt, die Reinigungseinheit mit wenigstens einer rotierenden Bürste wird im oberen Bereich der geneigten Dachfläche beziehungsweise des Photovoltaikelementes beispielsweise positioniert. Durch Aufsprühen von Reinigungsflüssigkeit und der gleichzeitigen rotierenden Bewegung der Bürste wird dann mit der Reinigung begonnen. Dies erfolgt üblicherweise so, dass schlangenartig die erreichbare Fläche von oben nach unten gereinigt wird, sodass der mit der Vorrichtung erreichbare Teil der zu reinigenden Fläche komplett gereinigt ist. Danach wird gegebenenfalls die Vorrichtung umgesetzt, um weiter unten liegende Teile eventuell zu reinigen oder aber zu seitlich sich daneben befindlichen Bereichen. Die Maschine wird demzufolge so oft, wie entsprechend der Dachfläche bzw. zu reinigenden Fläche notwendig, umgesetzt. Als Reinigungsmittel werden normale Reinigungsmittel mit hoher Reinigungskraft und bevorzugt Reinigungsmittel verwendet, die eine schnelle und streifenfreie Trocknung ermöglichen. Die Erfindung ist hierbei nicht auf spezielles Mittel eingeschränkt, sondern es ist vielmehr möglich, hierzu geeignete Reinigungsmittel entsprechend einzusetzen und der Reinigungsflüssigkeit, wie beispielsweise dem Wasser, zuzumischen.

Da die erfindungsgemäße Vorrichtung auch mit einer Versiegelungseinrichtung ausgestattet ist, ist es möglich, nach dem Waschen, einen so genannten Perltrockner oder Hochleistungstrockner noch aufzubringen. Dadurch wird die Fläche streifenfrei getrocknet und gleichzeitig versiegelt. Die so gereinigten Flächen sind dann wieder lange Zeit mit einem gewissen Selbstreinigungseffekt ausgestattet und müssen lediglich bei starker Verschmutzung wieder gereinigt werden. Für Solaranlagen oder Photovoltaikanlagen hat die erfindungsgemäße Vorrichtung neben dem Sauberkeitsaspekt selbstverständlich auch den Vorteil, dass die Anlagen mit voller Leistungsfähigkeit wieder Wärme beziehungsweise Elektroenergie zur Verfügung stellen können. Bei starker Verschmutzung ist die Leistungsfähigkeit von Solaranlagen und insbesonder Photovoltaikanlagen erheblich eingeschränkt. Durch den Einsatz der Vorrichtung ist es jetzt möglich, diesen Nachteil zu beseitigen.

Die Erfindung wird nachfolgend anhand von Ausführungsbeispielen weiter beschrieben.

Es zeigen:

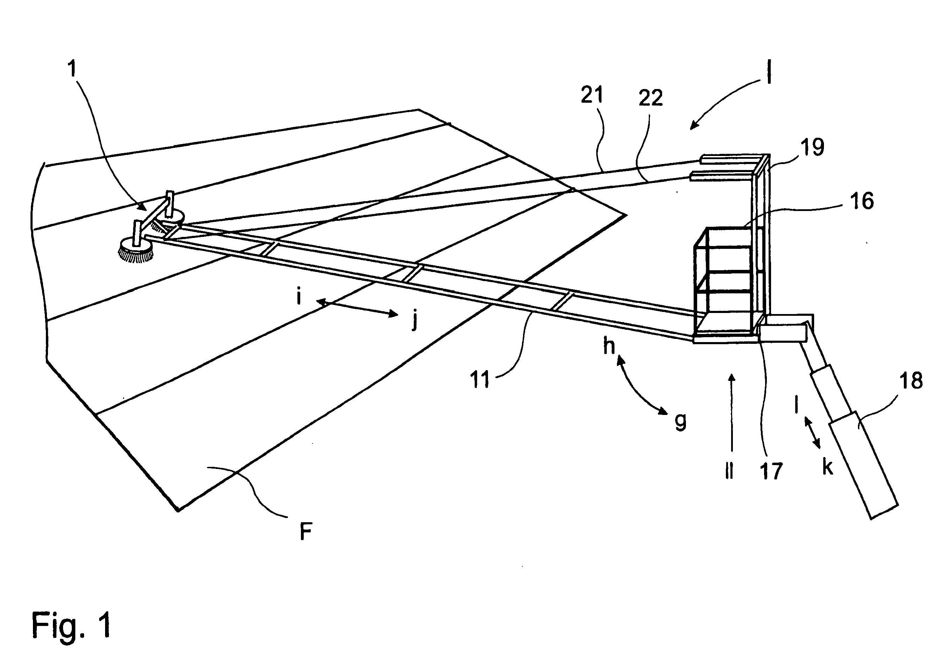

- Fig. 1 bis 3: zwei Ausgestaltungen der erfin- dungsgemäßen Vorrichtung sowie Detailansichten hierzu.

Die Fig. 1 zeigt eine erste Ausführungsform der erfindungsgemäßen Vorrichtung zum Reinigen von glatten Flächen. Mit dem Bezugszeichen 1 ist dabei die Reinigungseinheit, hier lediglich schematisch angedeutet, mit zwei rotierenden Bürsten, bezeichnet. Die Reinigungseinheit 1 ist an einem Gestänge 11 angeordnet, welches wiederum schwenkbar an einer Bedieneinheit II angeordnet ist. An der Bedieneinheit II ist ein Hebegerät 18, schematisch angedeutet, über die Schnittstelle 17 angekoppelt. Die Bedieneinheit II hat dabei ein Bühne 16, welches einen Rahmen 19 aufweist, der die Abfang- beziehungsweise Verstelleinrichtung I aufnimmt. Die Abfang- beziehungsweise Verstelleinrichtung I ist in der dargestellten Variante durch zwei Seile 21, 22 angegeben. Diese Seile lassen sich in ihrer Länge, beispielsweise über eine nicht dargestellte Winde, verändern, so dass sich das Gestänge 11 in Richtung des Doppelpfeiles g-h schwenken läßt. Damit ist es möglich, durch Verlängerung beziehungsweise Verkürzung der Seile das Gestänge immer in eine Position zu bringen, dass die Reinigungseinheit 1 planparallel zur zu reinigenden Oberfläche F angeordnet ist. Mit Hilfe des Hebegerätes 18, welches lediglich schematisch angedeutet ist, läßt sich die gesamte Bedieneinheit II beziehungsweise die gesamte Vorrichtung in ihrer Arbeitshöhe verändern und zwar in Richtung des Doppelpfeiles 1-k. Das Gestänge 11 läßt sich ebenfalls, wie schematisch angedeutet, in Richtung des Doppelpfeiles i-j ausziehen beziehungsweise einziehen. Dabei ist es insbesondere bevorzugt vorgesehen, dass das Gestänge 11 teleskopierbar ausgebildet ist.

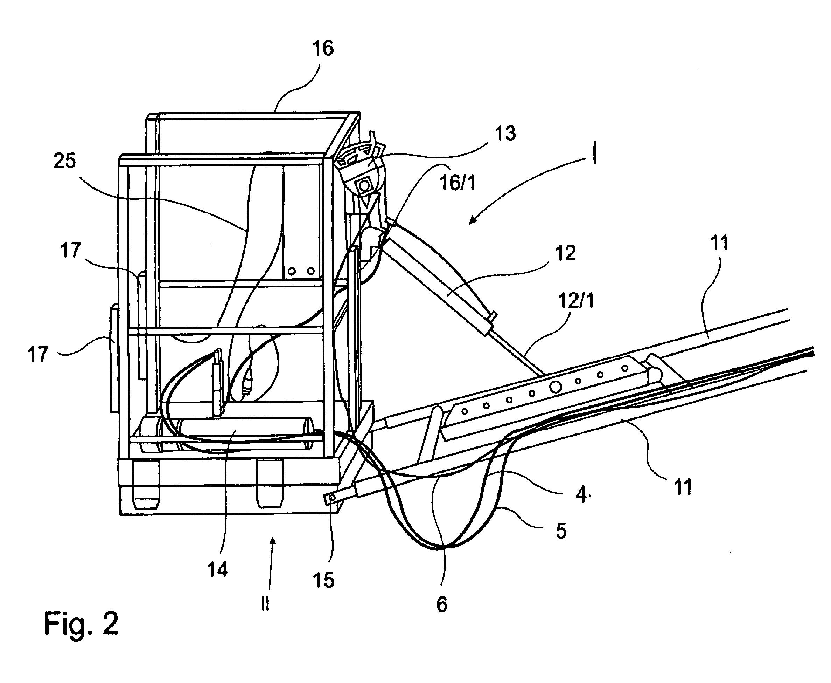

In Fig. 2 ist ein Ausschnitt der erfindungsgemäßen Vorrichtung dargestellt, der sich auf eine zweite Ausgestaltung bezieht. Hierbei ist die Abfang- beziehungsweise Verstelleinheit durch einen Hydraulikzylinder 12 mit entsprechender Kolbenstange 12/1 vorgesehen. Das Gestänge 11 ist an der Achse 15 schwenkbar gelagert. Des weiteren ist ersichtlich, dass der Hydraulikzylinder 12 an dem Rahmen 16/1 der Bühne 16 befestigt ist. Dies stellt allerdings nur eine bevorzugte Ausgestaltung dar. Selbstverständlich kann der Hydraulikzylinder 12 auch an der Bühne 16 selbst befestigt werden. Des weiteren ist eine Schnittstelle 17 vorgesehen, mittels derer die Bedieneinheit II an einem Hebegerät, welches hier nicht dargestellt ist, ankoppelt werden kann. Dabei trägt das Hebegerät dann selbstverständlich auch entsprechende Schnittstellen, um eine problemlose Kopplung zu ermöglichen. Wie ersichtlich, trägt die Arbeitsbühne 16 auch ein Antriebsaggregat 14, hier als Hydraulikantriebsaggregat ausgebildet. Durch das Hydraulikantriebsaggregat werden dabei die Zylinder und/oder Motoren mit entsprechender Hydraulik versorgt. Mit dem Bezugszeichen 13 ist die Bedienvorrichtung schematisch angedeutet. Mittels der Bedienvorrichtung 13 werden die notwendigen Bedienvorgänge zur Bedienung und Steuerung des Gerätes durchgeführt. Die Hydraulikleitungen tragen die Bezugszeichen 4, 5 und 6. Des weiteren sind Steuerleitungen 25 vorgesehen, die beispielsweise zur Bedienvorrichtung führen.

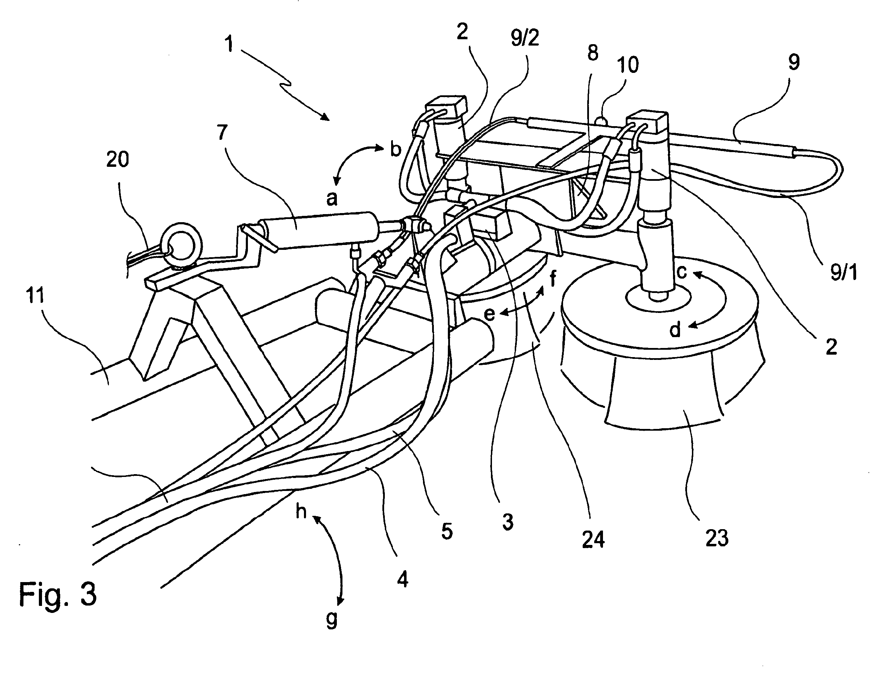

In Fig. 3 ist ein weiteres Detail der erfindungsgemäßen Vorrichtung dargestellt und zwar hier die besondere Art und Weise der Ausgestaltung der Reinigungseinheit 1. Es wird festgehalten, dass die in Fig. 3 dargestellte Reinigungseinheit 1 sich sowohl bei der Ausgestaltung nach Fig. 1 einsetzen läßt, als auch bei der Ausgestaltung nach Fig. 2. Bereits vorgestellte Bezugszeichen werden in gleicher Weise wie in den vorhergehenden Figuren verwendet, weshalb auf eine erneute Vorstellung verzichtet wird. In dieser Ausgestaltung neu ist, dass hier die Motoren 2 zum Antrieb der Bürsten 23 und 24, wie ersichtlich, eingereicht sind. Es handelt sich hierbei um Hydraulikmotoren. Im weiteren ist es vorgesehen, dass die Reinigungseinheit 1 insgesamt am Gestänge 11 verschwenkbar vorgesehen ist. Die Verschwenkbarkeit wird dabei mittels eines weiteren Hydraulikzylinders 7 bewerkstelligt. Die dazu notwendige Drehachse ist der Einfachheit halber hier nicht dargestellt, befindet sich aber zwischen Gestell 11 und dem vorderen Teil der Reinigungseinheit 1.

Mit dem Bezugszeichen 3 ist ein Hydraulikverteiler angegeben, über den die Hydraulikflüssigkeit, die über die Zuleitungen 4, 5 zugeführt wird, verteilt wird. Mit dem Doppelpfeil a-b ist die Verschwenkbarkeit der Reinigungseinheit 1 angedeutet. Mit dem Bezugszeichen g-h ist ein Doppelpfeil bezeichnet, der die Verschwenkbarkeit des Gestells 11 bezeichnet. In dieser Ausgestaltung erstmals sichtbar ist eine Versprüheinrichtung 8. Über diese Versprüheinrichtung 8 wird die Reinigungsflüssigkeit, gegebenenfalls gemischt mit Entspanner, auf die Oberfläche aufgetragen. Die Bürsten 23 und 24 führen eine bevorzugt gegensinnlich gerichtete Drehbewegung durch und reinigen so die Oberfläche.

Im vorderen Teil der Reinigungseinheit 1 ist eine Überwachungseinrichtung 10 schematisch angedeutet. Diese Überwachungseinrichtung 10 kann beispielsweise als Sensor oder Videokopf oder Fotoapparat, Videoeinrichtung oder dergleichen ausgebildet sein. Eine besondere Ausgestaltung ist auch in Fig. 3 gezeigt, nämlich derart, dass eine Versiegelungseinrichtung 9 vorgesehen ist. Diese Versiegelungseinrichtung 9 hat zwei Zuleitungen 9/1, 9/2, über die Versiegelungs- und/oder Trocknungsmittel auf die Oberfläche aufgetragen werden können.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung zum Reinigen von glatten Flächen, wie zum Beispiel Oberflächen von Solarkollektoren, Photovoltaikelementen, Dachflächen von Gebäuden, insbesondere aus Glas oder dergleichen, mit wenigstens einer Reinigungseinheit (1), einem Gestänge (11), an dessen einem Ende die Reinigungseinheit (1) angeordnet ist und wenigstens einer Bedieneinheit (II), wobei eine Abfang- beziehungsweise Verstelleinrichtung (I) vorgesehen ist, mittels derer die von der Vorrichtung auf die Oberfläche eingetragene Last einstellbar beziehungsweise veränderbar ist, **dadurch gekennzeichnet, dass** die Abfang- beziehungsweise Verstelleinrichtung (I) die Last des Gestänges (11) über die Bedieneinheit (II) abfängt beziehungsweise ableitet.

2. Vorrichtung nach Anspruch 1, **dadurch gekennzeichnet, dass** die Abfang- beziehungsweise Verstelleinrichtung (I) durch einen Seilzug (21, 22) mit Winde, ein verstellbares Gestänge oder dergleichen angegeben ist.

3. Vorrichtung nach einem der vorhergehenden Ansprüche, **dadurch gekennzeichnet, dass** die Abfang- beziehungsweise Verstelleinrichtung (I) durch wenigstens einen Hydraulikzylinder (12) angegeben ist, der eine bevorzugt teleskopische Kolbenstange (12/1) antreibt.

4. Vorrichtung nach einem der vor der vorhergehenden Ansprüche, **dadurch gekennzeichnet, dass** die Bedieneinheit (II) als Bühne (16) ausgebildet ist, an der das Gestänge (11) an wenigstens einer Achse (15) drehbar gelagert ist und an der dem Gestänge (11) zugewandten Seite wenigstens einen Rahmen (16/1) oder dergleichen aufweist, an dem die Abfang- beziehungsweise Verstelleinheit (I) angeordnet beziehungsweise befestigt ist und/oder die als Bühne (16) ausgebildete Bedieneinheit (II) als Arbeitsfläche beziehungsweise Arbeitsbühne ausgebildet ist.

5. Vorrichtung nach einem der vorhergehenden Ansprüche, **dadurch gekennzeichnet, dass** an der Bedieneinheit (II) wenigstens eine Schnittstelle (17) zum Anschluß an ein Hebegerät (18), wie zum Beispiel eine Hebebühne, einen Bagger, einen Kran oder dergleichen, vorgesehen ist und Hebebühne, Bagger oder Kran eine dazu korrespondierende Schnittstelle aufweisen und/oder die Bedieneinheit (II) selbst eine insbesondere verfahrbare Höheneinstellvorrichtung aufweist.

6. Vorrichtung nach einem der vorhergehenden Ansprüche, **dadurch gekennzeichnet, dass** an der Bedieneinheit (II) das Antriebsaggregat (14) für die Reinigungseinheit (1) inklusive einer Vorrats- und Fördereinrichtung für das oder die Reinigungsmittel vorgesehen ist und/oder an der Bedieneinheit (II) eine Anschlussschnittstelle zum
Anschluß an Antriebsmedien, wie Strom, Hydraulikpumpe oder dergleichen, vorgesehen ist.

7. Vorrichtung nach einem der vorhergehenden Ansprüche, **dadurch gekennzeichnet, dass** die Reinigungseinheit (1) wenigstens eine rotierende Bürste (23, 24) aufweist und/- oder die Reinigungseinheit (1) von sich in einer Ebene hin- und herbewegbaren Schwamm-, Leder- oder Gummistreifen gebildet ist und/oder die Bürste (23, 24) eine im wesentlichen waagerecht zur Reinigungsfläche orientierte Drehachse aufweist.

8. Vorrichtung nach Anspruch 7, **dadurch gekennzeichnet, dass** die Bürste (23, 24) eine im wesentlichen senkrecht zur Reinigungsfläche orientierte Drehachse aufweist und/oder wenigstens eine Versprüheinrichtung (8) zum Aufbringen von Reinigungsflüssigkeit vorgesehen ist und/oder die Versprüheinrichtung (8) eine insbesondere elektronisch gesteuerte Dosiereinrichtung aufweist, mittels derer Reinigungsmittel und/oder Entspanner zumischbar sind.

9. Vorrichtung nach Anspruch 8, **dadurch gekennzeichnet, dass** die insbesondere elektronisch gesteuerte Dosiereinrichtung entweder für mehrere zur Reinigung notwendige Medien oder nur für ein Medium, wie Wasser, Osmosewasser, Reinigungsmittel oder dergleichen vorgesehen ist und/oder eine Versiegelungseinrichtung (9) an der Reinigungseinheit (1) vorgesehen ist, die varziegelungseinrichtung (9) an der Reinigungseinheit (1) vorgesehen ist, die Versiegelungsmittel auf die gereinigte Fläche aufzubringen vermag.

10. Vorrichtung nach einem der vorhergehenden Ansprüche, **dadurch gekennzeichnet, dass** wenigstens eine Überwachungseinrichtung (10) vorgesehen ist, die die gereinigte Oberflächen auf Schäden prüft, diese gegebenenfalls anzeigt und/oder dokumentiert und/oder die Überwachungseinrichtung (10) durch wenigstens einen Sensor, eine Videokamera, ein photographisches Aufnahmegerät oder dergleichen, vorzugsweise gekoppelt mit einer Speichereinheit, gebildet ist.

11. Vorrichtung nach einem der vorhergehenden Ansprüche, **dadurch gekennzeichnet, dass** als Antriebsaggregat der Bürste (23, 24) ein Motor (2), wie zum Beispiel ein Hydraulikmotor oder ein Elektromotor vorgesehen ist und/oder die Reinigungseinheit (1) am Gestänge (11) schwenkbar angeordnet ist.

12. Vorrichtung nach einem der vorhergehenden Ansprüche, **dadurch gekennzeichnet, dass** das Gestänge (11) verlängerbar, insbesondere teleskopierbar ausgebildet ist und/oder in wenigstens einem Teil des Gestänges (11) eine schwingungsaufnehmende beziehungsweise schwingungsdämpfende Verstärkung vorgesehen ist.

13. Vorrichtung nach einem der vorhergehenden Ansprüche, **dadurch gekennzeichnet, dass** das Gestänge (11) modulartig aufgebaut und verlängerbar ist und/oder die einzelnen Module mittels Rohrknotentechnik aufgebaut sind.

14. Vorrichtung nach einem der vorhergehenden Ansprüche, **dadurch gekennzeichnet, dass** eine Höhennivelierung vorgesehen ist, die bevorzugt durch Fotozellen, Sensoren oder dergleichen angegeben ist und/oder die Reinigungseinheit (1) auch eine Trocknungseinrichtung, Absaugvorrichtung oder dergleichen umfaßt.

15. Hebegerät, wie zum Beispiel eine Hebebühne, ein Kran oder dergleichen, mit einer Vorrichtung nach einem der vorhergehenden Ansprüchen.

## Claims

1. Device designed to clean smooth areas like surfaces of solar cells, photovoltaic systems, roofs of buildings and in particular surfaces built of glass or of similar materials, containing at least one cleaning unit (1), a linkage (11) holding at one end the cleaning unit (1), at least one control unit (II) and a supporting and adjusting device (I) allowing to support and to adjust the load applied onto the surface, **characterized** therein that the supporting and adjusting device (I) supports and absorbs the load of the linkage (11) via the control unit (II).

2. Device according to claim 1, **characterized** therein that the supporting and adjusting device (I) includes a cable winch (21, 22) and an adjustable linkage or a similar device.

3. Device according to one of the preceding claims, **characterized** therein that the supporting and adjusting device (I) comprises at least one hydraulic cylinder (12) driving preferably a telescopic piston rod.

4. Device according to one of the preceding claims, **characterized** therein that the control unit (II) configuration can be viewed as a platform (16) supporting the linkage (11) pivot-mounted on at least one axis (15), and at least one frame (16/1) or another similar structure on the same side of the platform as the linkage (11) and maintaining the supporting and adjusting device (I) and/or therein that the control unit (II) being configured as a platform (16) is useable as a bearing surface or a working platform.

5. Device according to one of the preceding claims, **characterized** therein that the control unit (II) includes at least one interface (17) allowing to connect a lifting machine (18) like a lifting platform, a hydraulic shovel, a crane or a similar machinery which all possess on their side a corresponding control interface and/or therein that the control unit (II) has itself and in particular a mobile device allowing to adjust its height.

6. Device according to one of the preceding claims, **characterized** therein that the control unit (II) includes an engine (14) driving the cleaning unit (1) and a storage and supply system for the cleaning agent and/or therein that the control unit (II) possesses a confection system for some energy supplies like an electrical power supply, hydraulic pumps or similar energy sources.

7. Device according to one of the preceding claims, **characterized** therein that the cleaning unit (1) possesses at least a rotating brush (23, 24) and/or therein that the cleaning unit (1) is built of a band of sponge, leather or rubber which can be moved back and forth in a plane and/or therein that the brush (23, 24) rotates around a mainly horizontal axis parallel to the surface to be cleaned.

8. Device according to the preceding claim 7, **characterized** therein that the brush (23, 24) possesses a rotation axis mainly perpendicular to the surface to be cleaned and/or therein that there exists at least one spray system (8) to apply the cleaning agent liquid and/or therein that the spray system (8) uses in particular an electronic dosing system allowing to add cleaning agent and/or surfactants.

9. Device according to the preceding claim 8, **characterized** therein that the dosing system which is particular electronically controlled adjusts either several cleaning media in parallel or only one which can be water, reverse osmosis water, detergent or any equivalent and/or therein that a sealing equipment (9) is attached to the cleaning unit (1) allowing to apply surface sealants onto the cleaned surface.

10. Device according to one of the preceding claims, **characterized** therein that there exists at least one surveillance system (10) allowing to check the cleaned surfaces against damages, to indicate and/or document them and/or therein that the surveillance system (10) is built of at least a sensor, a video camera, a photographic storage device or any similar device preferably coupled to a storage unit.

11. Device according to one of the preceding claims, **characterized** therein that the drive unit of the brush (23, 24) is a motor (2) which can be a hydraulic motor or an electrical motor and/or therein that the cleaning unit (1) is pivot-mounted on the linkage (11).

12. Device according to one of the preceding claims, **characterized** therein that the linkage can be extended and is in particular a telescopic linkage and/or therein that there exists at least in one part of the linkage a reinforcement absorbing or damping oscillations.

13. Device according to one of the preceding claims, **characterized** therein that the linkage (11) is built of modules and can thereby be extended and/or therein that the individual modules are built using a tube joint technique.

14. Device according to one of the preceding claims, **characterized** therein that a height adjustment is foreseen and preferably based on photocells, sensors or similar devices and/or therein that the cleaning unit (1) also includes a drying unit, a suction device or any similar device.

15. Lifting machine as, for example a lifting platform, a crane or any similar equipment with a device according to one of the preceding claims.

## Revendications

1. Dispositif destiné au nettoyage de surfaces lisses fabriquées en particulier en verre ou en un matériau similaire telles des surfaces de capteurs solaires, d'éléments photovoltaoques ou de toits d'immeubles comportant une unité de nettoyage (1) située à l'extrémité d'un ensemble de tringles (11) et au moins une unité de commande (II) avec un dispositif d'amortissement et d'ajustement (I) permettant d'ajuster et de modifier la force appliquée par le dispositif sur la surface, **caractérisé en ce que** le dispositif d'amortissement ou d'ajustement (I) amortit et dévie le poids de l'ensemble des tiges (11) via l'unité de commande (II).

2. Dispositif selon la revendication 1, **caractérisé en ce que** le dispositif d'amortissement et d'ajustement (I) consiste en un palan (21, 22) avec treuil, en un ensemble de tringles mobiles ou en un système similaire.

3. Dispositif selon une des revendications précédentes, **caractérisé en ce que** le dispositif d'amortissement ou d'ajustement (I) est basé sur un cylindre hydraulique (12) commandant une tige de piston (12/1), de préférence une tige télescopique.

4. Dispositif selon une des revendications précédentes, **caractérisé en ce que** l'unité de commande (II) est basée sur une plateforme (16) à laquelle l'ensemble des tringles (11) est fixé de fagon à pouvoir pivoter autour d'au moins un axe (15) et comporte régalement du côtté des tringles (11) au moins un cadre (16/1) ou une structure similaire sur lequel le dispositif d'amortissement ou d'ajustement (I) est fixé et/ou **en ce que** la plateforme (16) formant la base de l'unité de commande (II) fonctionne comme un plan de travail ou une plateforme de travail.

5. Dispositif selon une des revendications précédentes, **caractérisé en ce que** l'unité de commande (II) comporte au moins une interface (17) destinée à connecter un appareil de levage (18) comme une plateforme élévatrice, une pelleteuse, une grue ou un autre appareil similaire possédant une interface correspondant à celle de l'unité de commande et/ou **en ce que** l'unité de commande (II) possède elle-même un dispositif d'ajustement de la hauteur et qui peut en particulier être déplacé latéralement.

6. Dispositif selon une des revendications précédentes, **caractérisé en ce que** l'unité de commande (II) comporte un moteur de commande (14) de l'unité de nettoyage (1) ainsi qu'un dispositif de stockage et un moyen d'acheminement pour les détergents et/ou **en ce que** l'unité de commande (II) comporte une interface destinée à la connexion des sources d'énergie comme un réseau électrique, une pompe hydraulique ou d'autres sources.

7. Dispositif selon une des revendications précédentes, **caractérisé en ce que** l'unité de nettoyage (1) comporte au moins une brosse rotative (23, 24) et/ou **en ce que** l'unité de nettoyage (1) consiste en une bande en éponge, en cuir ou en caoutchouc pouvant être déplacée dans un plan et/ou **en ce que** la brosse (23, 24) tourne autour d'un axe de rotation approximativement horizontal et parallèle à la surface à nettoyer.

8. Dispositif selon la revendication 7, **caractérisé en ce que** la brosse (23, 24) possède un axe de rotation approximativement perpendiculaire à la surface à nettoyer et/ou **en ce qu'**il existe au moins un dispositif de pulvérisation (8) destiné à appliquer le détergent et/ou en ce que le dispositif de pulvérisation (8) comporte en particulier un système de contrôle électronique du dosage permettant d'ajouter des détergents ou des surfactants.

9. Dispositif selon la revendication 8, **caractérisé en ce que** le système de contrôle du dosage en particulier électronique ajuste, soit plusieurs substances nécessaires au nettoyage, soit qu'une seule substance que ce soit de l'eau, de l'eau d'osmose inverse, un détergent ou une autre substance similaire et/ou **en ce qu'**il existe un dispositif de vitrification (9) au niveau de l'unité de nettoyage (1) permettant d'appliquer des agents vitrifiant à la surface nettoyée.

10. Dispositif selon une des revendications précédentes,
**caractérisé en ce qu'**il existe au moins un système de surveillance (10) examinant la surface nettoyée pour détecter des endommagements puis, le cas échéant, pour les signaler et/ou les enregistrer et/ou **en ce que** le système de surveillance (10) est réalisé par au moins un senseur, une caméra vidéo, un vidéo enregistreur ou par un appareil similaire qui est de préférence couplé à une unité d'enregistrement.

11. Dispositif selon une des revendications précédentes, **caractérisé en ce que** la commande de la brosse (23, 24) est un moteur (2) tel un moteur hydraulique ou électrique et/ou **en ce que** l'unité de nettoyage (1) peut pivoter tout en étant fixée aux tringles (11).

12. Dispositif selon une des revendications précédentes, **caractérisé en ce que** les tringles (11) peuvent être rallongées et en particulier être des tiges télescopiques et/ou **en ce qu'**au moins une partie de l'ensemble des tringles comporte un élément amortissant ou absorbant des oscillations.

13. Dispositif selon une des revendications précédentes, **caractérisé en ce que** les tringles (11) sont construites de fagon modulaire et peuvent être prolongées et/ou **en ce que** les modules individuels sont basés sur des nuds tubulaires soudés.

14. Dispositif selon une des revendications précédents, **caractérisé en ce qu'**il existe un système d'ajustement de la hauteur de préférence basé sur des cellules photosensibles, des senseurs et des éléments similaires et/ou **en ce que** l'unité de nettoyage (1) comporte également un dispositif de séchage, d'aspiration ou un dispositif semblable.

15. Appareil de levage comme une plateforme élévatrice ou une grue comportant un dispositif selon une des revendications précédentes.
